# FASCICULE DE BREVET EUROPEEN

(11) **EP 0 938 723 B1**
(45) Date de publication et mention de la délivrance du brevet: **25.02.2004**
(21) Numéro de dépôt: 98933745.6
(22) Date de dépôt: 26.06.1998
(51) Int. Cl.: G09B 29/10

(54) **DISPOSITIF REGLABLE PERMETTANT DE S'ORIENTER A PARTIR D'UN PLAN DE VILLE**
EINSTELLBARE VORRICHTUNG ZUR ORIENTIERUNG MITTELS EINES STADTPLANS
ADJUSTABLE DEVICE FOR TAKING BEARINGS FROM A CITY MAP

(30) Priorité: 19.08.1997 FR 9710486
(43) Date de publication de la demande: 01.09.1999
(73) Titulaire: Nguyen, Van Dung, 92380 Garches (FR)
(72) Inventeur: Nguyen, Van Dung, 92380 Garches (FR)
(86) Numéro de dépôt international: PCT/FR1998/001375
(87) Numéro de publication internationale: WO 1999/009540

(56) Documents cités:
- US-A- 4 337 577
- US-A- 4 893 247

## Description

Le plan de ville traditionnel avec sa fameuse pastille collée dessus qui porte les mots : " VOUS ETES ICI ", constitue le moyen bien pratique mis à la disposition du public pour rechercher son orientation.

Cependant, il ne donne pas le moyen à l'usager de s'orienter, le Nord du plan en face de lui ne correspond pas au Nord réel. Il est donc amené à faire une gymnastique intellectuelle pour réorienter le plan en utilisant les rues alentour. Malheureusement pour les personnes non habituées aux lieux telles que les touristes par exemple, ce petit travail est source d'erreurs et un peu désagréable.

Cela provient du fait que le plan de ville, toujours implanté à la verticale, représentant les rues et les constructions, n'est pas orienté avec les lieux géographiques locaux.

Le dispositif de l'invention permet de remédier à ces inconvénients et offre un système complet d'orientation. Il se présente sous forme d'une applique horizontale comportant un cadran de forme ronde pouvant être orienté puis verrouillé, muni d'une flèche dont la' pointe indique exactement le Nord géographique. L'orientation de la flèche du cadran est définie sur place en utilisant une simple boussole. Le réglage est donc spécifique à chaque emplacement particulier du plan de ville. Une fois orienté le cadran est verrouillé.

Le dispositif, dans son ensemble est fixé en-dessous 'du plan de ville , son axe vertical est confondu avec l'axe du support du plan de ville et parallèlement au sol.

Le cadran ainsi fixé constitue pour l'usager un véritable moyen d'orientation, celui ci peut localiser immédiatement la direction à prendre et peut, sans difficulté, trouver son lieu de destination avec précision et rapidité.

Les dessins 1/2 et 2/2 annexés illustrent l'invention:
La figure 1 est plus représentative de l'invention, représentant la vue de dessus de l'ensemble du dispositif.
La figure 2 représente en coupe, l'assemblage du cadran dans le logement de l'applique et la forme de son support.
   La maquette 2/2 représente en perspective, la fixation par vis du dispositif sur le support d'un plan de ville.

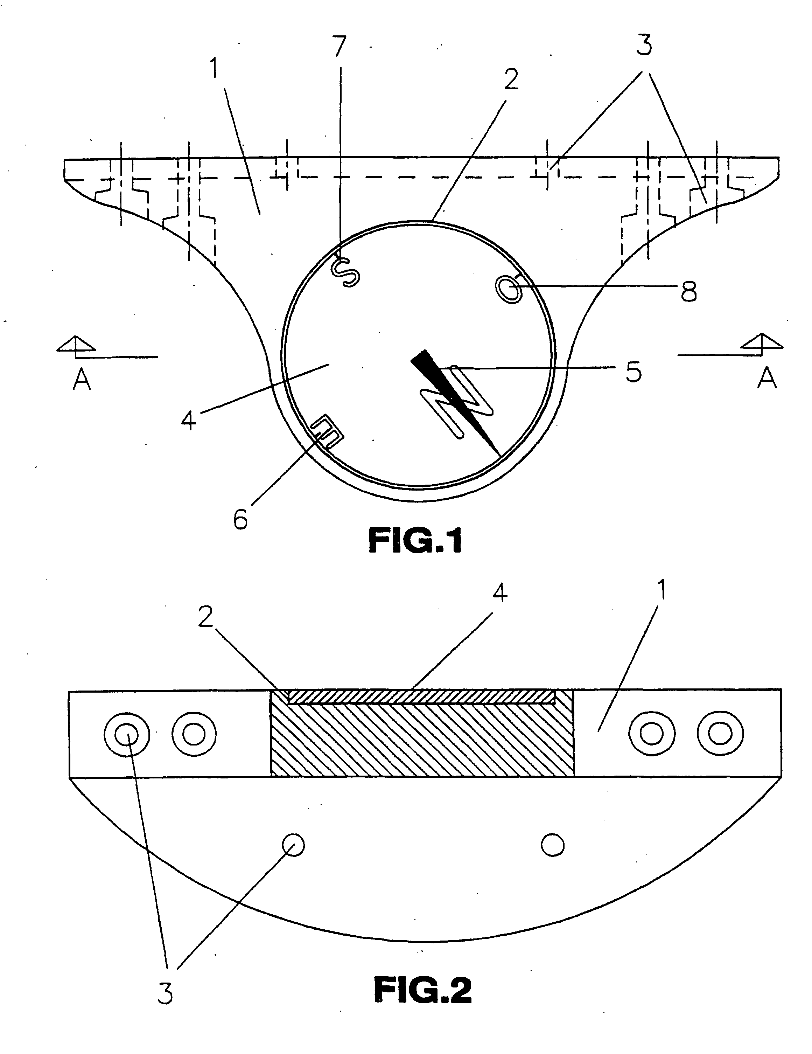

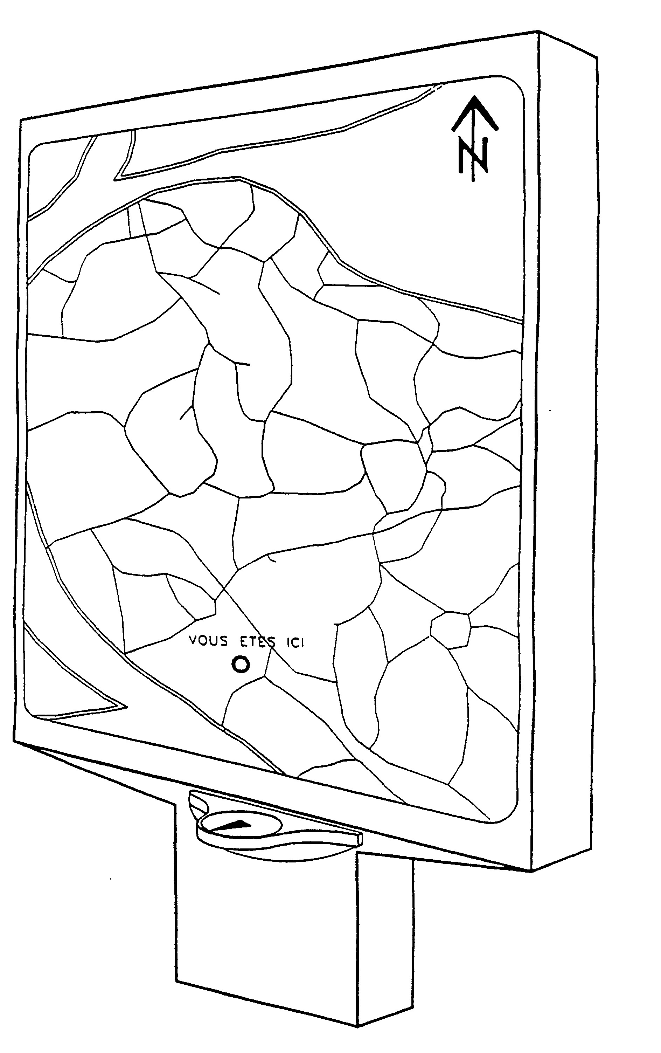

Conformément aux Fig.1 et Fig.2, le dispositif comporte une applique (1) sur laquelle un cadran (4) tourne (avant verrouillage) dans un logement (2). La flèche (5) du cadran indique le Nord géographique. Les trois autres points cardinaux sont également indiqués sur le cadran par les lettres E (pour l'Est) (6), S (pour le Sud) (7), O (pour l'Ouest) (8). Des trous (3) sont prévus pour la fixation avec des vis du dispositif sur le support du plan de ville.

L'applique pourrait avoir des dimensions de l'ordre de 16 cm pour la largeur, 8 cm pour la profondeur, 2 cm pour l'épaisseur horizontale et 0,60 cm pour la hauteur de son support. Le logement prévu pour l'insertion du cadran aurait un diamètre de 6,30 cm et une profondeur de 0,20 cm. Les six trous prévus pour la fixation du dispositif sur le support du plan de ville seraient de 0,50 cm de diamètre.

Le cadran aurait des dimensions de l'ordre de 6,10 cm pour le diamètre, 0,20 cm pour l'épaisseur.

Le dispositif selon l'invention pourra faire l'objet d'une fabrication en série, selon le nombre de plans de vi'lle implantés dans toutes les zones urbaines des grandes villes. Il sera fabriqué à partir de matières courantes telles que : le cuivre, l'aluminium, le plastique, etc.

Le dispositif selon l'invention est particulièrement destiné à indiquer le Nord géographique pour faciliter l'orientation à prendre pour aller vers une destination déterminée à partir d'un plan de ville, ou de tout autre plan d'orientation.

## Revendications

1. Dispositif indiquant les points cardinaux géographiques **caractérisé en ce qu'**il est composé d'une applique (1) munie de trous permettant de la fixer horizontalement par vissage (3) dans l'axe du support d'un plan de ville existant implanté à la verticale, ladite applique comprenant :
- un logement circulaire (2) dans lequel se trouve logé
- un cadran rond (4) pouvant pivoter autour de son centre et sur lequel est gravée une représentation de flèche (5) destinée à indiquer après verrouillage du cadran le Nord géographique ainsi que les initiales des trois autres points cardinaux E pour l'Est (6), S pour le Sud (7), O pour l'Ouest (8).

2. Dispositif selon la revendication 1 **caractérisé en ce que** l'orientation du cadran (4) muni des représentations des initiales N, E, S, O est réglée sur place de sorte que celles-ci indiquent exactement les points cardinaux géographiques; une fois le cadran orienté, celui ci est l'objet d'un verrouillage définitif propre à chaque emplacement particulier du plan de repérage vertical.

3. Dispositif selon les revendications précédentes **caractérisé en ce que** ce même dispositif peut être installé en usine sur un panneau destiné à supporter des plans de quartier et autres, l'ensemble étant ensuite implanté utilement pour l'usage particulier sur des lieux publics ou privés.

## Patentansprüche

1. Vorrichtung, die die geographischen Haupt-Himmelsrichtungen anzeigt, **gekennzeichnet durch** einen Sockel (1), der senkrecht an einem Stand eines vertikalen Stadtplanes mittels Schrauben (3) montierbar ist, aufweisend ein rundes Gehäuse (2), in dem ein runder Skalenträger (4) vorgesehen ist, der um sein Zentrum drehbar ist und auf dem eine bestimmte Pfeildarstellung (5) eingeprägt ist, die (nach der Befestigung des Skalenträgers an seinem Platz) auf den geographischen Norden (5) ebenso auch auf die Anfangsbuchstaben der drei anderen Himmelsrichtungen E für Osten (6), S für Süden (7), W für Westen (8) zeigt.

2. Vorrichtung nach Anspruch 1, **dadurch gekennzeichnet, daß** die Ausrichtung des mit der Darstellung der Anfangsbuchstaben N, E, S, W versehenen Skalenträgers (4) örtlich einstellbar ist, so daß die Anfangsbuchstaben exakt die geographischen Himmelsrichtungen anzeigt, sobald der Skalenträger genau ausgerichtet ist und seine Position endgültig zu jedem besonderen, auf dem Plan bezogenen Anbringungsort eingerastet ist.

3. Vorrichtung nach einem der vorangehenden Ansprüchen, **dadurch gekennzeichnet, daß** die gleiche Vorrichtung in einer Fabrik auf einem Brett montierbar ist, das Bezirkpläne oder andere tragen soll, wobei der gesamte Gerätesatz auf einem öffentlichen oder privaten Grundstück aufgestellt werden kann.

## Claims

1. Device indicating the geographic cardinal points **characterized in** the fact that it consists a fixture (1) which can be fastened with screws (3) horizontally to the stand of an existing vertically city map, the aforementioned base including therein :
- A circular housing (2) wherein is placed
- A round dial (4) that can rotate around its centre and on which is engraved a representation of an arrow which indicates (after locking in place of the dial) the geographic North (5) as well as the initials of the three other cardinal points E for East (6), S for South (7), W for West (8).

2. Device similar to claim 1 and **characterized by** the fact that the orientation of the dial (4) provided with the representations of initials N (5), E (6), S (7), W (8) is adjusted on-site so that they indicate exactly the geographic cardinal points; once the dial has been properly oriented, its position is definitively locked in place to each particular location of the related map.

3. Device similar to the preceding claims and **characterized by** the fact that this same device can be installed at the factory on a panel featuring plans of city districts or other entities, the whole set being then implanted on public or private property.
